# EUROPÄISCHE PATENTSCHRIFT

(11) **EP 0 554 782 B1**
(45) Veröffentlichungstag und Bekanntmachung des Hinweises auf die Patenterteilung: **07.10.1998**
(21) Anmeldenummer: 93101246.2
(22) Anmeldetag: 28.01.1993
(51) Int. Cl.: G11B 15/60

(54) **Wickeleinrichtung für Magnetbänder**
Winding apparatus for magnetic tapes
Dispositif d'enroulement pour bandes magnétiques

(30) Priorität: 06.02.1992 DE 9201432 U; 06.02.1992 DE 4203310
(43) Veröffentlichungstag der Anmeldung: 11.08.1993
(73) Patentinhaber: EMTEC Magnetics GmbH, 67059 Ludwigshafen (DE)
(72) Erfinder: Birkmann, Josef, 82256 Fürstenfeldbruck (DE); Scholtysik, Bernd, Dr., 81673 München (DE)

(56) Entgegenhaltungen:
- DE-A- 3 625 221
- DE-B- 1 126 154
- DE-C- 856 074
- DE-C- 1 004 039
- FR-A- 1 553 215
- US-A- 3 643 849
- US-A- 3 658 226

## Beschreibung

Die Erfindung betrifft eine Wickeleinrichtung für bandförmige Aufzeichnungsträger, insbesondere Magnetbänder mit zumindest einem Bandwickelkörper, der rotierend antreibbar ist, um das Band aufzuwickeln, wobei das Band durch eine mit einem beweglichen Führungsarm verbundene Andruckrolle mit elastischer Auflagefläche an der Stelle, wo das Band auf dem Wickel aufgewickelt wird, an den Wickel angedrückt wird.

Aus dem Stand der Technik sind Anlagen zur Herstellung von Bandstreifen bekannt, bei denen eine fortlaufende Folienbahn zu einzelnen Folienstreifen längsgeschnitten wird. Dies geschieht mit Hilfe einer senkrecht zur Bahnlaufrichtung angeordneten Reihe ortsfester Trennmesser, die zueinander gleichen Abstand haben und mit ihren gegen die Bahnbewegung gerichteten Schneiden in die Bahn hineinragen. Die fertigen Folienstreifen werden dann einzeln auf einer Aufspuleinheit auf Spulen oder flanschlose Wickelkerne aufgewickelt. Dabei können die Einzelaufspuleinheiten in Laufrichtung der Folienstreifen in einer Reihe hintereinander oder nebeneinander angeordnet, oder bei einer größeren Zahl aufzuwickelnder Folienstreifen können auch mehrere Reihen von Aufspuleinheiten in Etagen übereinander angeordnet sein.

Derartige Anlagen sind beispielsweise aus der DE-A-39 08 451 oder der EP-A-0 297 609 bekannt.

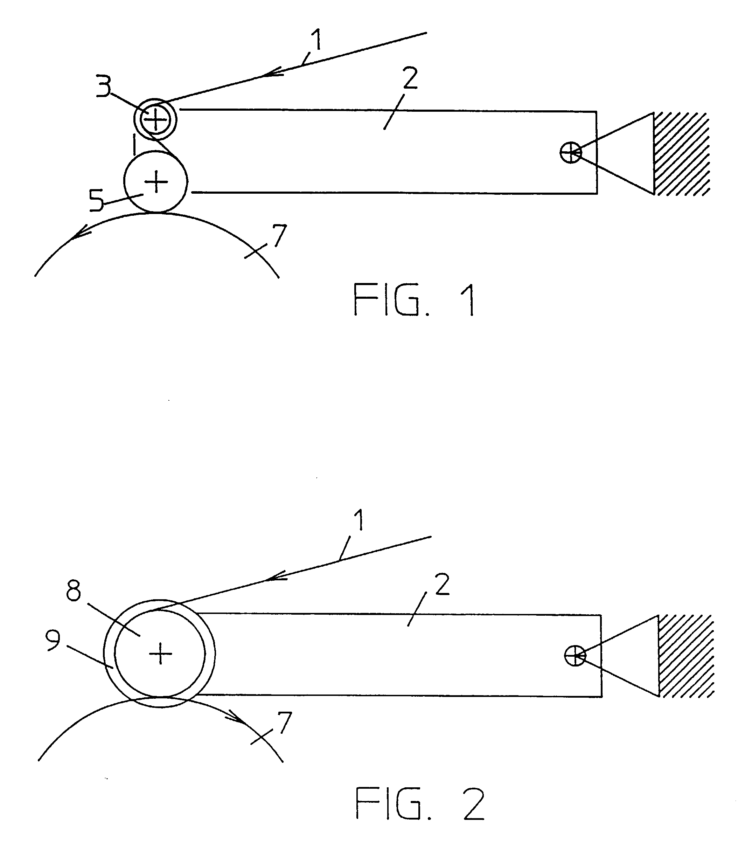

Aus der DE-A-36 25 221 sind ein Verfahren und eine Vorrichtung zum spulenförmigen Aufwickeln eines Magnetbandes auf einen Aufwickelkern bekannt. Hierbei wird das Magnetband mittels einer Positionssteuerrolle 4, einer Bandsteuerrolle 6 und einer Druckrolle 8 dem Wickelkern zugeführt. Die Bandsteuerrolle 6 und die Druckrolle 8 sind auf einer Wippe 9 angebracht und beide Rollen haben Kontakt zum Wickel (siehe Fig.1 und Spalte 1, Z.42-46). Die Wippe 9 ist ihrerseits an einem unter Federkraft stehenden Berührungsarm 7 gelagert, auf dem auch die Positionssteuerrolle 4 angeordnet ist.

Bei der Erfindung ist hingegen auch ein der bekannten Bandsteuerrolle 6 entsprechendes Bandführungs- und Umlenkelement 4 auf dem dem bekannten Berührungsarm 7 entsprechenden Führungsarm 2 angeordnet. Nur die der bekannten Druckrolle 8 entsprechende Rolle 5 ist an einem Schwingarm 6 angeordnet, der an dem Führungsarm 2 angelenkt ist. Außerdem greift an dem Schwingarm eine Kraft an, durch die die Andruckrolle an den Bandwickel angedrückt wird.

Beim Aufwickeln der Folienstreifen ist es von großer Bedeutung, daß bei dem Bandwickel ein einwandfreies Erscheinungsbild ohne überstehende Bandlagen erzielt wird. Dies wird beispielsweise nach der Lehre der DE-A-38 18 113 dadurch erzielt, daß beim Herstellen eines Bandwickels eine Magnetfeld-Erzeugungseinrichtung zum Anziehen des Magnetbandes in eine vorgegebene Richtung einwirkt. In der genannten DE-OS sind noch weitere Wickelvorrichtungen beschrieben, bei denen ein umlaufendes hochflexibles endloses Band das aufzuwickelnde Magnetband an den Wickel andrückt, um auf diese Weise das Band sauber und fest aufzuwickeln.

Weiterhin ist eine Wickeleinrichtung bekannt, wie sie in der Figur 1 dargestellt ist. Der ankommende Bandstreifen 1 läuft über eine Führungsrolle 3 mit seitlichen Borden und dann über eine Rolle 5, welche eine elastische Oberfläche hat und das Band an den aufzuwickelnden Bandwickel 7, andrückt. Bandführung 3 und elastische Rolle 5. sitzen am Ende eines beweglichen Führungsarmes 2. Ein Nachteil dieser Wickelvorrichtung besteht darin, daß der Führungsarm wegen seiner Masse und seines Trägheitsmoments schnellen Höhenausschlägen des Bandwickels nicht folgen kann. Diese Höhenausschläge entstehen durch eine schlechte Zentrierung der Wickelkerne auf der Kernaufnahme der Wickelvorrichtung sowie durch Abweichungen des Kerns beziehungsweise des Bandwickels von der idealen Kreisform, was dadurch eintreten kann, daß beim Bewickeln unter hohem Druck der Bandwickel über seinen Umfang ungleichmäßig komprimiert wird. Bei einer derartigen Anordnung wurde beobachtet, daß die beschriebenen Höhenausschläge des Führungsarms ein schlechtes Wickelbild zur Folge haben.

Ein an sich sehr glattes Wickelbild wird durch die in Figur 2 dargestellte Wickelvorrichtung erzielt, wie sie beispielsweise durch die Firma Dusenbery vertrieben wird. Dabei wird der ankommende Bandstreifen über eine Bandführungsrolle 8 mit seitlichen Borden 9, welche die äußeren Lagen des Bandwickels 7 führen, auf diesen aufgewickelt. Der Abstand der seitlichen Borde 9 voneinander ist nur geringfügig größer als die Breite des Bandstreifens 1. Hierbei entstehen jedoch an den Seitenflächen des Bandwickels Glanz- und Schabestellen, die den optischen Eindruck des Wickelbildes stören. Außerdem neigt die Wickelrolle bei hohen Aufwickelgeschwindigkeiten dazu, wegen des Höhenschlags des Bandwickels geringfügig vom Bandwickel abzuheben, wodurch das Band seitlich etwas ausschießen kann. Bei der nächstfolgenden Umdrehung des Bandwickels wird das hervorstehende Band dann von den seitlichen Borden 9 der Führungsrolle 8 beschädigt.

Trennmaschinen, Loader und Winder enthalten zahlreiche mit seitlichen Flanschen versehene drehbare Laufrollen zur Umlenkung der Streifen. Diese Laufrollen können aus Kunststoffmaterial oder aus Metall bestehen. Bei der Umlenkung der Magnetbandstreifen an diesen Umlenkrollen können folgende Probleme auftreten:
- Beim Trennen des Magnetbandes in Streifen kann Abfall an den Rändern entstehen (Fasern, Staub etc.), welcher die Oberfläche des Magnetbandes beschädigt, wenn er sich an den Laufrollen absetzt oder am Magnetband anhaftet und so zu Signalstörungen, den sogenannten Dropouts, Anlaß geben kann.
- Bei längerem Gebrauch der oben genannten Maschinen können die drehbaren Umlenkrollen sich festsetzen, so daß das Magnetband über die Oberfläche der Rollen schleift beziehungsweise reibt und dadurch beschädigt wird.
- Bei höheren Laufgeschwindigkeiten drehen sich die Rollen nicht mit Bandgeschwindigkeit, besonders bei kleinem Umschlingungswinkel, so daß Reibung an den Borden auftritt.
- Die Lauffläche der Umlenkrollen kann bei längerer Gebrauchsdauer beschädigt werden.
- Die Ränder der Magnetbandstreifen können durch die Flansche beschädigt werden.

Eine verbesserte Laufrolle, bei der die Lauffläche hartcoatbeschichtet ist und wobei sich zwischen den Flanschen und der Lauffläche rinnenartige Einschnitte befinden, ist aus dem DE-GM 88 11 603 bekannt.

Weiterhin sind für die oben genannten Zwecke nicht drehbare Umlenkelemente bekannt, deren Lauffläche, um ein Verkratzen der Folienstreifen zu vermeiden, von innen mit Druckluft beaufschlagt wird, um auf diese Weise die Streifen auf einem Luftkissen zu führen. Dabei wurde beobachtet, daß die seitlichen ebenfalls feststehenden Flansche die Bandkanten insbesondere bei hoher Transportgeschwindigkeit, beschädigen können. Durch die Beanspruchung der Bordscheiben durch das Band schleifen sich die Bordscheiben ein, was zu einer Beschädigung der Bandkanten führen kann.

Der vorliegenden Erfindung lag deshalb die Aufgabe zugrunde, eine Wickelvorrichtung der eingangs genannten gattungsmäßigen Art zu finden, welche nicht die vorstehend aufgeführten Nachteile des Standes der Technik hat und die besonders auch bei hohen Wickelgeschwindigkeiten ein einwandfreies glattes Wickelbild zur Folge hat.

Erfindungsgemäß wurde die Aufgabe gelöst mit einer Wickeleinrichtung mit den im kennzeichnenden Teil des Anspruchs 1 genannten Merkmalen. Weitere Einzelheiten der Erfindung gehen aus den Unteransprüchen, den Zeichnungen und der Beschreibung hervor.

Die Figuren 1 bis 5 stellen dar:
- Figur 1 - 2: Wickeleinrichtungen gemäß dem Stand der Technik
- Figur 3 - 4: Zwei bevorzugte Ausführungen von erfindungsgemäßen Wickeleinrichtungen
- Figur 5: eine Draufsicht auf eine Umlenkrolle für eine erfindungsgemäße Wickeleinrichtung
- Figur 6: einen Querschnitt der Umlenkrolle gemäß Figur 5.

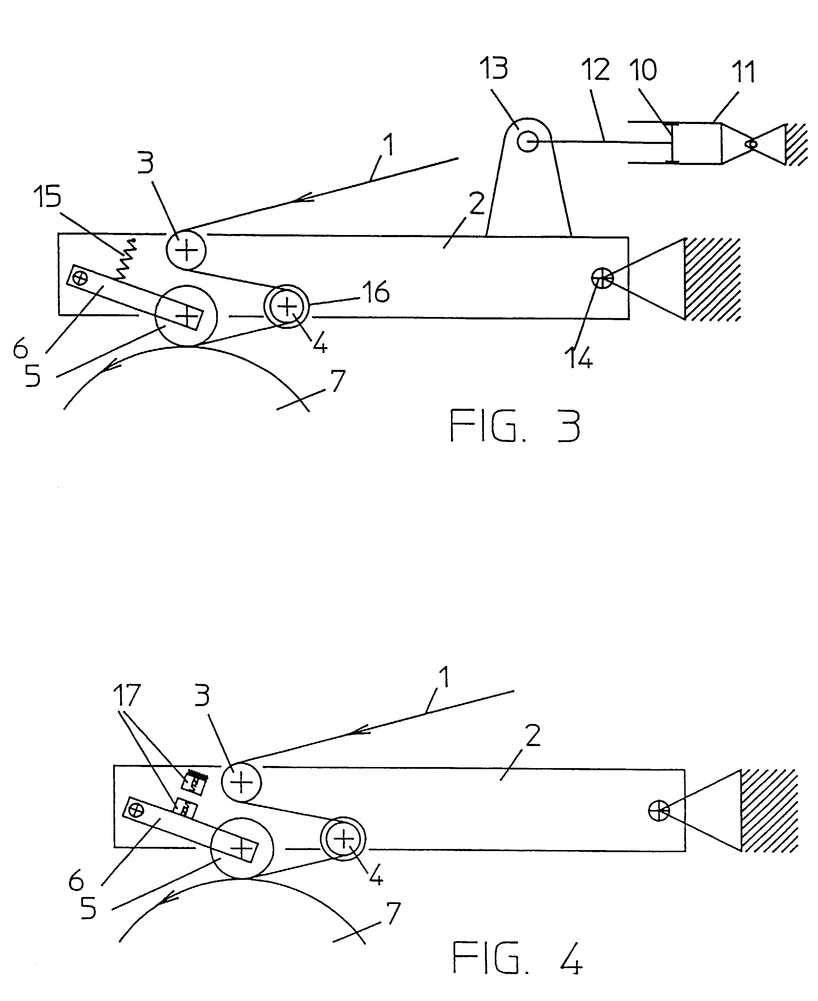

Nachfolgend wird die Erfindung anhand der Figur 3 näher erläutert. Dabei läuft der Bandstreifen 1 zunächst über eine Bandumlenkrolle 3 und eine weitere Bandführungsrolle 4 mit seitlichen Borden 16 und wird dann auf den Bandwickel 7 aufgewickelt. Erfindungsgemäß befindet sich an der Stelle, an der das Band tangential am Bandwickel ankommt, eine Rolle 5 mit elastischer Auflagefläche, die schwenkbar an einem massearmen Schwingarm 6 gelagert ist. Die Andruckrolle 5 wird also von Band 1 nur unter einem geringen Winkel umschlungen. Die Bandumlenkelemente 3, 4 sowie der Arm 6 sind an dem drehbaren Führungsarm 2 gelagert. Dieser ist in einer bevorzugten Ausführung über eine Stange 12 mit einem Kolben 10 verbunden, der über den pneumatisch betriebenen Zylinder (11) angetrieben wird und wobei der Angriffspunkt 13 der Stange in der Nähe des Drehpunkts 14 des Führungsarms sitzt. Auf diese Weise kann der Führungsarm je nach Aufbau und Größe des Bandwickels verschwenkt werden. Der Schwingarm 6 wird durch eine Druckfeder 15 oder alternativ dazu durch eine (nicht gezeichnete) Zugfeder oder eine magnetische Beaufschlagung mit der Rolle 5 an den Bandwickel 7 angedrückt.

Eine Möglichkeit zur magnetischen Beaufschlagung des Schwingarmes 6, um den Andruck an den Bandwickel zu bewirken, geht aus der Figur 4 hervor. Dabei werden einander gegenüberstehende gleichnamige Magnetpole 17 mit dem Schwingarm 6 beziehungsweise dem Führungsarm 2 fest verbunden, um auf diese Weise eine Abstoßung der Magnetpole und damit den gewünschten Andruck der Rolle 5 an den Bandwickel 7 zu bewirken.

Während bei einem Andruck der Rolle 5 an den Bandwickel 7 mittels Federsystem eine lineare Zunahme der Federkraft mit dem Weg besteht, erhält man bei einer magnetischen Beaufschlagung mittels sich abstoßender Magnete eine deutlich progressive Kraft-Weg-Kennlinie. Natürlich sind auch Kombinationen von Feder- und Magnetsystemen zum Andruck der Rolle 5 an den Bandwickel möglich.

Die Bandführungs- und Bandumlenkungselemente 3, 4 können entweder drehbar seil, alternativ dazu können sie aber auch feststehen und mit Druckluft an ihrer bandberührenden Fläche beaufschlagt sein, um auf diese Weise eine Luftkissenführung des Bandes 1 um die Umlenkelemente zu bewirken. Weiterhin kann das Bandführungselement 4 aus einer Luftumlenkung mit drehbaren Borden zur seitlichen Führung des Magnetbandes bestehen.

Es hat sich gezeigt, daß mit der erfindungsgemäßen Vorrichtung ein einwandfreies glattes Wickelbild im Vergleich zu den gemäß dem Stand der Technik hergestellten Wickeln erzielt wird, wie der nachfolgende Vergleich zeigt. Dazu wurde bei einer Wickeleinrichtung gemäß Figur 1 ein Bandwickel mit einer Aufwickelgeschwindigkeit von 400 beziehungsweise 600 m/min hergestellt, bis der Bandwickel einen Durchmesser von 35 cm hatte. Mit einem handelsüblichen Rauhtiefe-Meßgerät wurde das Wickelbild der Seitenfläche des Bandwickels als Rauhtiefe Rₐ gemessen. Im Gegensatz dazu wurde mit der erfindungsgemäßen Wickeleinrichtung gemäß Figur 3 ein Bandwickel mit gleichem Durchmesser und mit gleichen Wickelgeschwindigkeiten hergestellt und ebenfalls mittels des eben beschriebenen Gerätes die Rauhtiefe Rₐ gemessen.

Der Vergleich zeigt folgende Werte

| Wickeleinrichtung gemäß | Rauhtiefe der Wickelseitenflächen | |
|---|---|---|
| | Rₐ bei 400 m/min | Rₐ bei 600 m/min |
| Figur 1 (Stand der Technik) | 3,7 µm | 7,4 µm |
| Figur 3 (Erfindung) | 1,9 µm | 2,6 µm |

Die durch die Erfindung bewirkte Verbesserung des Wickelbildes wirkt sich mit zunehmender Wickelgeschwindigkeit stärker aus.

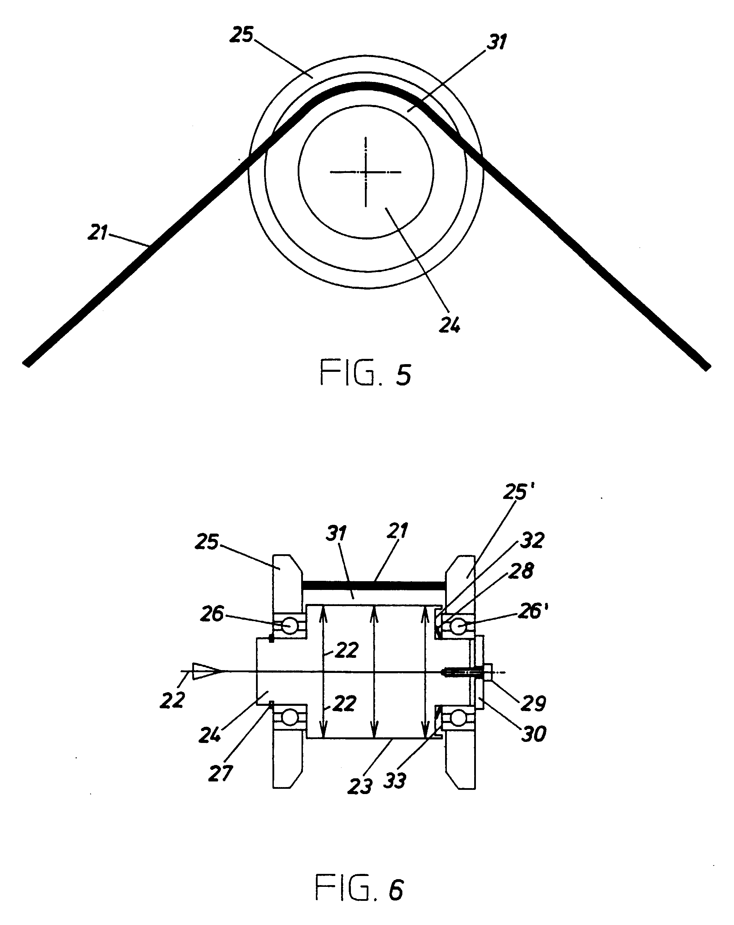

Wie die Figuren 5 und 6 darstellen, dient bei der Ausführung der Bandführung zur Umlenkung des Bandstreifens 21 ein Luftpolster 31, das dadurch erzeugt wird, daß zugeführte Druckluft 22 durch Bohrungen oder eine poröse Oberfläche der Lauffläche 23 des Grundkörpers 24 unter den Bandstreifen 21 austritt. Zur seitlichen Führung des Bandstreifens dienen zwei Flansche 25, 25', die auf dem Grundkörper 24 mittels Roll- oder Kugellagern 26, 26' drehbar angebracht sind. Der seitliche Abstand der beiden Flansche 25, 25' entspricht der Breite des Bandstreifens 21.

Der Abstand der Flansche muß für eine gute Führung des Bandstreifens auf wenige Tausendstel Millimeter genau sein. Um dies ohne großen fertigungstechnischen Aufwand zu erreichen, kann eines der Lager 26 durch geeignete Maßnahmen, zum Beispiel einem Sicherungsring 27 axial starr fixiert sein und das zweite Lager 26' kann gegen ein Federelement 28 zum Beispiel eine Tellerfeder, mittels einer Schraube 29 und einer Scheibe 30 verstellbar ausgebildet sein, wobei sich die Tellerfeder zwischen der Seitenfläche 32 des hohlzylindrischen Grundkörpers und der Lagerinnenseite 33 befindet. Als seitliche Führungsborde des Bandes können auch die Lageraußenringe der beiden Lager 26 dienen.

Bei der beschriebenen Ausführung der Bandführung wird die sonst bei Luftumlenkungen an den feststehenden Führungsflanschen auftretende Reibung des Bandstreifens vermieden, dadurch wird eine schonende Behandlung der Bandkanten erreicht.

Es hat sich gezeigt, daß mit dem neuerungsgemäßen Umlenkelement auch bei Bandgeschwindigkeiten von 400 bis 600 m/min ein einwandfreies Führen des Bandes möglich ist. Dabei kann der Abstand der beiden Flansche 25, 25' auch geringfügig kleiner sein als die Bandstreifenbreite.

## Patentansprüche

1. Wickeleinrichtung für bandförmige Aufzeichnungsträger, insbesondere Magnetbänder mit zumindest einem Bandwickelkörper, der rotierend antreibbar ist, um das Band aufzuwickeln, wobei das Band durch eine mit einem schwenkbaren Führungsarm verbundene Andruckrolle mit elastischer Auflagefläche an der Stelle, wo es auf dem Bandwickel aufgewickelt wird, an den Wickel angedrückt wird, dadurch gekennzeichnet, daß
- das Band (1) durch auf dem beweglichen Führungsarm (2) gelagerte Bandumlenk- (3) und Führungselemente (4) so geführt wird, daß es ungefähr an der Stelle, an der die Andruckrolle (5) am Bandwickel (7) aufliegt, diesen tangential erreicht, so daß die Andruckrolle nur unter einem geringen Winkel vom Band (1) umschlungen wird
- die Andruckrolle (5) an einem massearmen weiteren Schwingarm (6) drehbar angebracht ist, wobei der Arm (6) schwenkbar am Führungsarm (2) gelagert ist
- die Andruckrolle (5) durch am Schwingarm (6) angreifende Federwirkung (15) oder magnetische Beaufschlagung (17) an den Bandwickel (7) angedrückt wird.

2. Wickeleinrichtung nach Anspruch 1, dadurch gekennzeichnet, daß der Führungsarm (2) bewegbar über einen weiteren Arm (12) mit einem Kolben (10) verbunden ist, welcher in einen pneumatisch betriebenen Zylinder (11) eintaucht.

3. Wickeleinrichtung nach Anspruch 1 oder 2, gekennzeichnet durch ein hohlzylindrisches Umlenkelement, welches mit die Lauffläche (23) begrenzenden Flanschen (25, 25') versehen ist, wobei die mit Bohrungen versehene Lauffläche (23) des Umlenkelements (24) von innen mit Druckluft (22) zur Bildung eines Luftpolsters (31) unter dem Bandstreifen (21) beaufschlagt ist und wobei die beiden seitlichen Flansche (25, 25') auf dem hohlzylindrischen Grundkörper (24) mittels Lagern (26, 26') drehbar angebracht sind.

4. Wickeleinrichtung nach Anspruch 3, dadurch gekennzeichnet, daß ein Lager (26) des Umlenkelements axial durch einen Sicherungsring (27) fixiert ist, während das andere Lager (26') durch eine axial eindrehbare Schraube (29) gegen die Kraft eines zwischen Zylinderseitenfläche (32) und Lagerinnenseite (33) eingebrachten Federelements (28) axial einstellbar ist.

5. Wickeleinrichtung nach Anspruch 3 bis 4, dadurch gekennzeichnet, daß der axiale Abstand der Innenseite der beiden Flansche (25, 25') des Umlenkelements gleich oder geringfügig kleiner ist als die Breite des Folienstreifens (21).

## Claims

1. A winding device for recording media in tape form, in particular magnetic tapes, having at least one tape roll element, which can be rotatably driven in order to wind the tape up, the tape being pressed against the roll at the point where it is being wound onto the tape roll by a pinch roller connected to a pivotal guide arm and having a flexible bearing surface, wherein
- the tape (1) is guided by tape-deflecting elements (3) and guiding elements (4), mounted on the movable guide arm (2), in such a way that, approximately at the point at which the pinch roller (5) rests on the tape roll (7), said tape reaches said roll tangentially, so that the pinch roller is wrapped around by the tape (1) only at a small angle
- the pinch roller (5) is rotatably fitted on a lowmass further swing arm (6), the arm (6) being mounted pivotally on the guide arm (2)
- the pinch roller (5) is pressed against the tape roll (7) by spring action (15) or magnetic actuation (17) acting on the swing arm (6).

2. A winding device as claimed in claim 1, wherein the guide arm (2) is movably connected by means of a further arm (12) to a piston (10), which enters a pneumatically operated cylinder (11).

3. A winding device as claimed in claim 1 or claim 2, which comprises a hollow cylindrical deflecting element which is provided with flanges (25, 25') which limit the running surface (23), compressed air (22) being applied to the running surface (23), provided with bores, of the deflecting element (24) from inside in order to form an air cushion (31) below the tape strip (21), and the two lateral flanges (25, 25') being rotatably mounted on the hollow cylindrical basic element (24) by means of bearings (26, 26').

4. A winding device as claimed in claim 3, wherein one bearing (26) of the deflecting element is fixed axially by a locking ring (27), while the other bearing (26') can be axially adjusted against the force of a spring element (28) inserted between the cylinder side surface (32) and the inside (33) of the bearing by means of a screw (29) which can be screwed in axially.

5. A winding device as claimed in claim 3 or 4, wherein the axial spacing between the insides of the two flanges (25, 25') of the deflecting element is equal to or slightly smaller than the width of the film strip (21).

## Revendications

1. Dispositif d'enroulement de supports d'enregistrement en forme de bande, en particulier de bandes magnétiques, comportant au moins un corps d'enroulement de bande qui peut être mis en rotation pour l'enroulement de la bande, la bande étant pressée sur l'enroulement de bande à l'endroit où elle s'enroule sur celui-ci par un galet presseur à surface d'appui élastique qui est joint à un bras de guidage pivotant, caractérisé par le fait que
- la bande (1) est guidée par des éléments de renvoi (3) et des éléments de guidage (4) montés sur le bras de guidage mobile (2) de façon qu'elle atteigne l'enroulement de bande (7) tangentiellement approximativement à l'endroit où le galet presseur (5) s'appuie sur celui-ci, de sorte que le galet presseur est embrassé par la bande (1) sous un petit angle,
- le galet presseur (5) est monté tournant sur un bras oscillant (6) de faible masse qui est monté pivotant sur le bras de guidage (2),
- le galet presseur (5) est pressé sur l'enroulement de bande (7) par action élastique (15) sur le bras oscillant (6) ou par action magnétique (17).

2. Dispositif d'enroulement selon la revendication 1, caractérisé par le fait que le bras de guidage (2) est relié de manière mobile par un autre bras (12) à un piston (10) qui plonge dans un cylindre pneumatique (11).

3. Dispositif d'enroulement selon l'une des revendications 1 et 2, caractérisé par un élément de renvoi cylindrique creux pourvu de joues (25, 25') qui limitent la surface d'appui (23), de l'air comprimé (22) étant envoyé de l'intérieur à la surface d'appui (23), pourvue de trous, de cet élément de renvoi (24), pour la formation d'un coussin d'air (31) sous la bande (21), et les deux joues (25, 25') étant montées tournantes sur le corps de base cylindrique creux (24) au moyen de roulements (26, 26').

4. Dispositif d'enroulement selon la revendication 3, caractérisé par le fait qu'un roulement (26) de l'élément de renvoi est fixé axialement par un anneau d'arrêt (27), tandis que l'autre roulement (26') est réglable axialement par une vis se vissant axialement (29) contre l'action d'un élément élastique (28) placé entre une surface frontale de cylindre (32) et le côté intérieur (33) du roulement.

5. Dispositif d'enroulement selon les revendications 3 et 4, caractérisé par le fait que la distance axiale entre les faces intérieures des deux joues (25, 25') de l'élément de renvoi est égale ou légèrement inférieure à la largeur de la bande de feuille (21).
